# EUROPEAN PATENT APPLICATION

(11) **EP 3 038 000 A1**
(43) Date of publication of application: **29.06.2016**
(21) Application number: 14307186.8
(22) Date of filing: 24.12.2014
(51) Int. Cl.: G06F 21/35, G06F 21/36

(54) **COMMUNICATION SYSTEM BETWEEN A FIRST ELECTONIC DEVICE COMPRISING A COLOR-SENSOR AND A SECOND ELECTRONIC DEVICE COMPRISING A COLOR EMITTER**

(71) Applicant: GEMALTO SA, 92190 Meudon (FR)
(72) Inventor: Antoine, Matthieu, 92190 Meudon (FR); Normend, Yoan, 92190 Meudon (FR)
(74) Representative: Cassagne, Philippe M.J.

(57) **Abstract**

The present invention relates to a communication system SYS between a first electronic device E1 and a second electronic device E2. The first electronic device E1 comprises a color-sensor CCs and which is adapted to capture a color Co2 having a second value V2pm; to compute an inter-color distance d between two captured colors Co2 and Co2'; to send an acknowledgement if said inter-color distance d is greater than a predetermined value Vd; and to send a request signal Rq to said second electronic device E2 to display a new color Co1. The second electronic device E2 comprises a color emitter CCe and a screen Sc and is adapted to display a color Co1 according to a first value V1 pm of at least one color parameter Pm; to increase the first value V1 pm and to display a new color Co1.

## Description

### TECHNICAL FIELD

The present invention relates to a communication system between a first electronic device and a second electronic device. It also relates to an associated communication method. Such communication system may be used in a non-limitative example for any color modulation based communication to exchange data between a first electronic device and a second electronic device

### BACKGROUND OF THE INVENTION

A communication system comprising a first electronic device and a second electronic device, which is known by the man skilled in the art, permits a user to enter a PIN (Personal Identification Number) code on the first electronic device by means of the second electronic device via color modulation. The second electronic device comprises a color emitter which is adapted to emit a color and display it on a screen of said second electronic device.

Usually, a color is displayed on a screen by specifying colors parameters such as the RGB triplet (Red, Green, and Blue) which indicates respectively the relative value of each red, blue and green sub-pixel. However the spectral response of red, blue and green sub-pixels varies from one screen to another.

One problem of this prior art is that the rendered color will then differ between screens for a same RGB triplet. The difference is function of the screen brightness, of the quality of the display, etc. The variation may be enough to compromise a color modulation based communication with several colors (for example with 12 colors to display a keyboard with 12 keys) when their values are predefined beforehand in the first and second electronic devices. The first electronic device will not be able to recognize the data displayed on the screen of the second electronic device, and therefore, the PIN code won't be validated even if it is the right PIN code.

### SUMMARY OF THE INVENTION

It is an object of the invention to provide a communication system between a first electronic device and a second electronic device, which permits an efficient and reliable color modulation based communication between two electronic devices.

To this end, there is provided a communication system between a first electronic device and a second electronic device, **wherein** said communication system comprises:
- said second electronic device which comprises a color emitter and a screen and which is adapted to:
   - display on said screen by means of the color emitter a color which varies according to a first value of at least one color parameter;
   - upon reception of a first signal from said first electronic device:
      - if said first signal is an acknowledgement signal, store said displayed color, said displayed color stored corresponding to a captured color stored in said first electronic device.
      - increase the first value of said at least one color parameter;
      - displayed a new color according to said increased first value;
- said first electronic device which comprises a color-sensor and which is adapted to:
   - capture by means of the color-sensor a color which is the measure of said displayed color, and whose at least one color parameter comprises a second value;
   - compute an inter-color distance between two captured colors;
   - if said inter-color distance is greater than a predetermined value for each captured color stored, send an acknowledgement signal to said second electronic device;
   - send a request signal to said second electronic device to display a new color.

As we will see in further details, the communication system permits to perform a calibration of colors used for a future color modulation based communication so that the first electronic device is able to recognize the data displayed on the screen of the second electronic device, said data being associated to a color, whatever the screen color rendering of the second electronic device is.

In addition, there is provided a first electronic device adapted to communicate with a second electronic device, **wherein** said first electronic device comprises a color-sensor and is adapted to:
- capture by means of the color-sensor a color which is the measure of a color displayed by means of a color emitter of said second electronic device, and whose at least one color parameter comprises a second value;
- compute an inter-color distance between two captured colors;
- if said inter-color distance is greater than a predetermined value for each captured color stored, send an acknowledgement signal to said second electronic device;
- send a request signal to said second electronic device to display a new color.

In addition, there is provided a second electronic device adapted to communicate with a first electronic device, **wherein** said second electronic device comprises a color emitter and a screen and is adapted to:
- display on said screen by means of the color emitter a color which varies according to a first value of at least one color parameter;
- upon reception of a first signal from said first electronic device:
   - if said first signal is an acknowledgement signal, store said displayed color, said displayed color stored corresponding to a captured color stored in said first electronic device;
   - increase the first value of said at least one color parameter;
   - displayed a new color according to said increased first value.

According to non-limitative embodiments of the invention, the communication system, the first electronic device, the second electronic device, in accordance with the invention further comprises the following characteristics.

In a first non-limitative embodiment, the computation of the inter-color distance is performed between a captured color and at least one captured color stored, and if said inter-color distance is greater than a predetermined value for each captured color stored, said first electronic device is further adapted to store said captured color.

In a second non-limitative embodiment, said first electronic device is further adapted to temporarily memorize each color which is captured, and the computation of the inter-color distance is performed between a temporarily memorized captured color and a captured color stored.

In a non-limitative embodiment of said second embodiment, if a first condition is fulfilled, said first electronic device is further adapted to:
- compute said inter-color distance for at least one captured color stored;
- if said inter-color distance is greater than said predetermined value for each captured color stored,
   - store said temporarily memorized captured color;
   - send to said second electronic device an acknowledgment signal.

In a non-limitative embodiment,
- said second electronic device is further adapted to send a signal to said first electronic device to inform of the display of a color; and
- said first electronic device is further adapted to receive said signal.
In a non-limitative embodiment, said at least one color parameter is hue and/or saturation.

In a non-limitative embodiment, when the first condition is fulfilled, said first electronic device is further adapted to:
- associate a symbol with at least one captured color stored; and
- transmit the symbol to said second electronic device; and
- said second electronic device is further adapted to:
   - receive the symbol from said first electronic device; and
   - associate each symbol received with at least one displayed color stored corresponding to a captured color stored in the first electronic device.

In a non-limitative embodiment, said second electronic device is further adapted to display on the screen all the symbols with their associated displayed color stored.

In a non-limitative embodiment, said first electronic device and said second electronic device are adapted to communicate via a Bluetooth Low Energy™ link.

In a non-limitative embodiment, said second electronic device is a mobile phone, a tablet, a phablet, a personal computer, or a laptop, or a portable device equipped with a light emitted diode.

In a non-limitative embodiment, said first electronic device is a portable electronic device.

In addition, according to a first non-limitative embodiment, there is provided a communication method between a first electronic device and a second electronic device, **wherein** said communication method comprises:
- displaying on a screen by means of the color emitter of said second electronic device a color which varies according to a first value of at least one color parameter;
- capturing by means of the color-sensor of said first electronic device a color which is the measure of said displayed color, and whose at least one color parameter comprises a second value;
- computing by means of said first electronic device an inter-color distance between said captured color and at least another captured color which is stored;
- if said inter-color distance is greater than a predetermined value for each captured color stored, storing by means of said first electronic device said captured color and send by means of said first electronic device an acknowledgement signal to said second electronic device;
- otherwise, sending by means of said first electronic device a request signal to said second electronic device to display a new color.
- upon reception by means of said second electronic device of a first signal:
   - if said first signal is an acknowledgment signal, storing by means of said second electronic device said displayed color, said displayed color stored corresponding to a captured color stored in said first electronic device;
   - increasing by means of said second electronic device the first value of said at least one color parameter;
   - if a first condition is not fulfilled, displaying by means of said second electronic device a new color.

In addition, according to a second non-limitative embodiment, there is provided a communication method between a first electronic device and a second electronic device, **wherein** said communication method comprises:
- displaying on a screen by means of the color emitter of said second electronic device a color which varies according to a first value of at least one color parameter;
- capturing by means of the color-sensor of said first electronic device a color which is the measure of said displayed color, and whose at least one color parameter comprises a second value;
- storing by means of said first electronic device said captured color;
- sending by means of said first electronic device a request signal to said second electronic device to display a new color;
- upon reception by means of said second electronic device of a request signal from said first electronic device for a new color to be displayed:
   - increasing by means of said second electronic device the first value of said at least one color parameter; and
   - if a first condition is not fulfilled, displaying by means of said second electronic device a new color;
   - otherwise:
      - computing by means of said first electronic device an inter-color distance between said temporarily memorized captured color and at least one captured color stored; and
      - if said inter-color distance d is greater than a predetermined value for each captured color stored,
         - storing by means of said first electronic device said temporarily captured color;
         - sending by means of said first electronic device to said second electronic device an acknowledgment signal;
         - upon reception by means of said second electronic device from said first electronic device of said acknowledgment signal, storing by means of said second electronic device a color displayed, said displayed color stored corresponding to said captured color stored in said first electronic device.

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 illustrates schematically the communication system between a first electronic device and a second electronic device according to the invention;
- Fig. 2 illustrates schematically the communication system of Fig. 1 and the functionalities of the different elements of said communication system;
- Fig. 3 illustrates schematically the communication system of Fig. 1 according to a first non-limitative embodiment;
- Fig. 4 is a schematic organization chart of the communication method according to a first non-limitative embodiment which is carried out by the communication system of Fig. 3;
- Fig. 5 is a first diagram sequence of the communication method of Fig. 4 illustrating a calibration stage, according to a non-limitative embodiment;
- Fig. 6 is a second diagram sequence of the communication method of Fig. 4 illustrating an association stage, according to a non-limitative embodiment;
- Fig. 7 illustrates schematically the communication system of Fig. 1 according to a second non-limitative embodiment; and
- Fig. 8 is a schematic organization chart of the communication method according to a second non-limitative embodiment which is carried out by the communication system of Fig. 7.

### DESCRIPTION OF EMBODIMENTS OF THE INVENTION

In the following description, well-known functions or constructions by the man skilled in the art are not described in detail since they would obscure the invention in unnecessary detail.

The present invention relates to a communication system SYS between a first electronic device E1 and a second electronic device E2 which are adapted to perform a color modulation based communication.

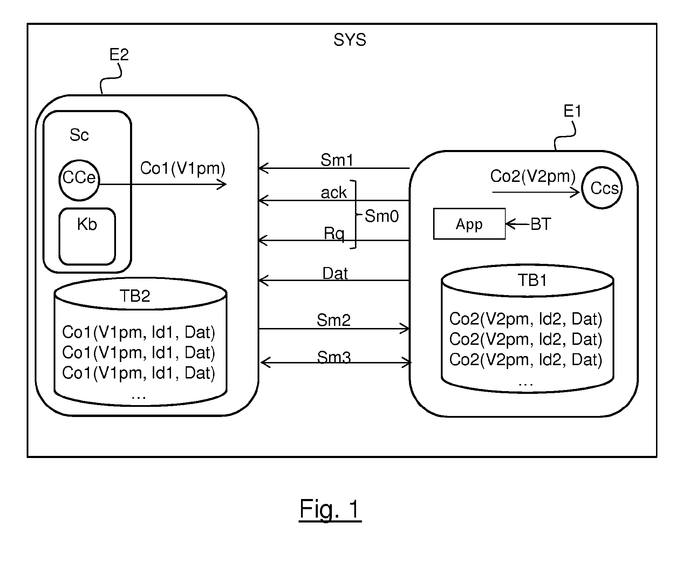

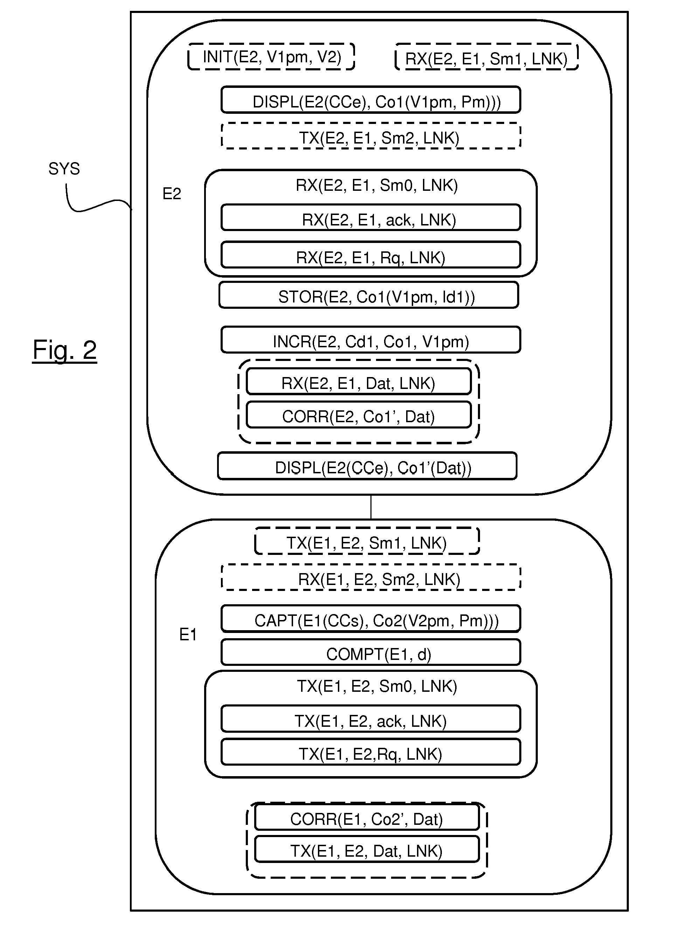

Said communication system SYS is illustrated in Fig. 1 and the different functionalities of its different components are illustrated in Fig. 2.

As illustrated in Fig. 1, the system SYS comprises:
- said first electronic device E1 comprising a color-sensor CCs; and
- said second electronic device E2 comprising a color emitter CCe.

In a non-limitative embodiment, the first electronic device E1 and the second electronic device E2 are Bluetooth Low Energy™ (BLE) devices. It means that they exchange data by means of a BLE communication link LNK.

In the following, "signal" means that the data are exchanged through the existing communication link LNK between the first electronic device E1 and the second electronic device E2.

In a non-limitative embodiment, the first electronic device E1 is a portable device. In a non-limitative variant, said first electronic device E1 comprises no screen.

In a non-limitative embodiment, the color-sensor CCs comprise three color filters for measuring the values of the RGB triplet of a color. From these measured values, the color-sensor CCs is adapted to directly deduced the values of the HSB triplet (Hue-Saturation-Brightness) also called HSV triplet (Hue-Saturation-Value) of a color. In another non-limitative embodiment, the central processing unit of the first electronic device E1 performs the computation of the values of the HSB triplet. Hence, in the non-limitative embodiment, a color is defined by three parameters Pm which are the Hue, Saturation and Brightness. This color model is well-known by the man skilled in the art.

It is to be reminded that the hue varies from 0° to 360°, the saturation varies from 0 to 100%, and the brightness varies from 0 to 100%.

In non-limitative embodiments, the second electronic device E2 is a mobile phone, a tablet, a phablet, a personal computer, or a laptop. Hence, the second electronic device E2 may be a portable device or not.

In a non-limitative variant, the second electronic device E2 further comprises a screen Sc.

The screen Sc comprises an input area with a plurality of virtual keys which make up a virtual keyboard Kb. Each virtual key is a visual display of a key into a color.

The approaching action on these virtual keys by the first electronic device E1 allows the user to interact with said first electronic device E1. The color-sensor CCs captures the colors from these virtual keys. In a non-limitative embodiment, the capture of a color is triggered by an action of the user. In another non-limitative embodiment, the capture of a color is triggered automatically.

xample of a mobile phone for the second electronic device E2 and of the portable electronic device for the first electronic device E1 will be taken in the following.

In order to communicate with said mobile phone E2, the portable device E1 is adapted to perform a calibration CA to find suitable color modulation values to use for the color modulation based communication. After the calibration, the mobile phone E2 will know what colors to display and the portable device E1 will know the corresponding values when captured by its color-sensor CCs.

In a non-limitative embodiment, the portable electronic device E1 comprises an application App which enables the calibration CA to be performed. Therefore, a user of the mobile phone E2 and of the portable electronic device E1 will launch said application App in order to calibrate the colors to be used for the color-based communication. Then, the user puts the portable electronic device E1 close to the screen Sc of the mobile phone E2 and, in a non-limitative embodiment, he presses a button BT to trigger said calibration CA. In another non-limitative embodiment, the application App is automatically launched via the BLE communication link LNK if both electronic devices have not been identified for said calibration before.

In a non-limitative embodiment, said first electronic device E1 is further adapted to send a calibration signal Sm1 to said mobile phone E2 in order to trigger a first display of a color Co1 by said second electronic device E2 on the screen Sc (function illustrated in dotted lines in Fig. 2 TX(E1, E2, Sm1, LNK)). This calibration signal Sm1 is transmitted via the BLE link LNK.

The mobile phone E2 is adapted to receive said calibration signal Sm1 (function illustrated in dotted lines in Fig. 2 RX(E2, E1, Sm1, LNK)).

Upon said reception, the mobile phone E2 is further adapted to initialize a first value V1pm of the color parameter Pm to a predetermined init value V2 (function illustrated in dotted lines in Fig. 2 INIT(E2, V1 pm, V2)), and then perform a first display of a color Co1.

The calibration CA has to be done one time only for a pair of mobile phone E2 and portable electronic device E1. It is done before exchanging data that is to say during the very first communication between the first electronic device E1 and the mobile phone E2. Then, the correlation between what is displayed on the screen Sc of said mobile phone E2 and what is seen by the portable electronic device E1 is recorded until the user decides to delete it.

It is to be noted that the BLE link LNK is used to synchronize the different steps of the calibration CA between the mobile phone E2 and the portable electronic device E1.

For said calibration CA, said mobile phone E2 is adapted to:
- display on said screen Sc by means of the color emitter CCe a color Co1 which varies according to a first value V1 pm of at least one color parameter Pm (function illustrated in Fig. 2 DISPL(E2(CCe), Co1 (V1 pm, Pm)));
- upon reception of a first signal Sm0 from said first electronic device E1 (function illustrated in Fig. 2 RX(E2, E1, Sm0, LNK):
   - if said first signal Sm0 is an acknowledgement signal ack, store said displayed color Co1, said displayed color stored Co1' corresponding to a captured color stored Co2' in said first electronic device E1 (function illustrated in Fig. 2 STOR(E2, Co1 (V1 pm, Id1)));
   - increase the first value V1 pm of said at least one color parameter Pm (function illustrated in Fig. 2 INCR(E2, Co1,V1pm) ;
   - displayed a new color Co1 according to said increased first value V1 pm.

Hence, for said calibration CA, said portable electronic device E1 is adapted to transmit a first signal Sm0 to said mobile phone E2 (function illustrated in Fig. 2 TX(E1, E2, Sm0, LNK), which is either an acknowledgment signal ack, either a request signal Rq.

Furthermore, for said calibration CA, said portable electronic device E1 is adapted to:
- capture by means of the color-sensor CCs a color Co2 which is the measure of said displayed color Co1, and whose at least one color parameter Pm comprises a second value V2pm (function illustrated in Fig. 2 CAPT(E1 (CCs), Co2(V2pm, Pm)));
- compute an inter-color distance d between two captured colors (function illustrated in Fig. 2 COMPT(E1, d));
- if said inter-color distance d is greater than a predetermined value Vd for each captured color stored Co2' send an acknowledgement signal ack to said second electronic device E2 (function illustrated in Fig. 2 TX(E1, E2, ack, LNK));
- send a request signal Rq to said second electronic device E2 to display a new color Co1 (function illustrated in Fig. 2 TX(E1, E2, Rq, LNK)).

Hence, for said calibration CA, said mobile phone E2 is adapted to receive from said portable electronic device E1 a signal Sm which is a request signal Rq to display a new color Co1 (function illustrated in Fig. 2 RX(E2, E1, Rq, LNK)).

It is to be noted that there may be a delay between the time where the first electronic device E1 sends a calibration signal Sm1 or a request signal Rq, both triggering the display of a color Co1, and the effective display of said color Co1 by the second electronic device E2. Therefore, in a non-limitative embodiment,
- said second electronic device E2 is further adapted to send a notification signal Sm2 to said first electronic device E1 to inform of the display of a color Co1 on said screen Sc (function illustrated in Fig. 2 TX(E2, E1, Sm2, LNK); and
- said first electronic device E1 is further adapted to receive said notification signal Sm2 (function illustrated in Fig. 2 TX(E1, E2, Sm2, LNK).

Said notification permits the second electronic device E2 to notify the first electronic device E1 that there is a new color Co1 which has been displayed on the screen Sc and consequently that said first electronic device E1 may begin a capture of the displayed color Co1 on the screen Sc.

The different functions are described in more detail hereinafter.

In a first non-limitative embodiment, said color parameter Pm is hue H.

In a second non-limitative embodiment, said color parameter Pm is saturation S.

In a third non-limitative embodiment the second electronic device E2 varies the color Co1 according to a first value V1 pm of two color parameters Pm which are hue H and saturation S.

It is to be noted that value of the brightness B may be any value different from 0 (the screen is black). In a non-limitative embodiment, the brightness B is equal to 100%.

Hence, in order to display a color Co1, the mobile phone E2 varies the hue H and/or the saturation S, but not the brightness B which is the third color parameter Pm in the HSB representation of the RGB color model. The brightness B is constant.

It is to be noted that the brightness of the HSB color model is different of the brightness of the screen Sc. Even if this latter varies over time, the values V2pm of the Hue or Saturation of a measured color Co2 won't change for a given displayed color Co1, contrary to the value of the brightness B of the HSB color model.

When the portable electronic device E1 captures a displayed color Co1, it will measure the color parameters Pm of said color Co1. Each one of the color parameters Pm measured comprises a second value V2pm which is different from the first value V1 pm of the color parameters Pm of the displayed color Co1. This leads to a captured color Co2. The difference comes from the spectral response of red, blue and green sub-pixels of the screen Sc which is different from the spectral response of red, blue and green filters of the color-sensor.

In order for a color Co2 (which is captured during the calibration CA) to be used for the future color modulation based communication, the inter-color distance d between two captured colors Co2, Co2' should be superior to a predetermined value Vd, and this for each captured color stored.

The predetermined value Vd is a compromise between:
- the numbers of colors necessary for the future color modulation based communication. The higher the value Vd is, the lesser the number of captured colors stored Co2' may be;
- the reliability of the color modulation based communication, that is to say, that for a displayed color Co1 corresponding to a displayed color stored Co1', the portable electronic device E1 will successfully retrieve the corresponding captured color stored Co2' (with the indexes Id1 and Id2 which are described in the following). The higher the value Vd is, the more reliable the communication is.

For the whole description, the reference Co2 refers to a captured color which is temporarily memorized or not.

For the whole description, the reference Co2' refers to a captured color which is persistently stored in memory and which may be used for the future color modulation based communication.

If a first condition Cd1 is not fulfilled, the portable electronic device E1 asks the mobile phone E2 for another color Co1 to be displayed via a request signal Rq (sent via the BLE link LNK).

When the mobile phone E2 receives the request signal Rq from the portable electronic device E1, and if the first condition Cd1 is not fulfilled, the mobile phone E2 will display another color Co1 with another first value V1 pm of the color parameter(s) Pm.

For this purpose, in a non-limitative embodiment, upon reception of the request signal Rq, the mobile phone E2 increases the previous first value V1pm by predetermined pitch P in order to generate a new first value V1 pm for the new color Co1 to be displayed.

In another non-limitative embodiment, said predetermined pitch P may be modified during the calibration loop. This may be the case if the predetermined pitch P chosen is too small for the portable electronic device E1 to discriminate during the calibration loop the captured colors Co2 from the one stored Co2'.

The calibration CA is finished when the first condition Cd1 is fulfilled.

As will be described later on, in a non-limitative embodiment, a calibration end signal Sm3 may be sent from one portable electronic device to the other one to inform of the end of the calibration CA.

When the calibration CA is finished, the portable electronic device E1 and the mobile phone E2 may perform an association of symbol Dat and the captured color stored Co2' via the BLE communication link LNK. Then, after this association, a color modulation based communication may begin between both electronic devices E1 and E2.

It is to be noted that when the calibration CA has to be done one time only for a pair of mobile phone E2 and portable electronic device E1, the association between symbol Dat and captured colors stored Co2' has to be done according to the application using said color modulation based communication.

Hence, in a non-limitative example, for a PIN code entering application, the association will used the digits 0 to 9 and the symbol "Ok" and "Cancel" for example. For another application which will permit the user to select one banking credit card from a plurality of banking credit cards, the association will be different.

A symbol Dat is associated with each captured color Co2' stored and therefore with each displayed color stored Co1'.

In a non-limitative embodiment, said first electronic device E1 is further adapted to:
- associate a symbol Dat with at least one captured color stored Co2' (function illustrated in dotted lines in Fig. 2 CORR(E1, Co2', Dat)); and
- transmit the symbol Dat to said second electronic device E2 (function illustrated in dotted lines in Fig. 2 TX(E1, E2, Dat, LNK)); and
- said second electronic device E2 is further adapted to:
   - receive the symbol Dat from said first electronic device E2 (function illustrated in dotted lines in Fig. 2 RX(E2, E1, Dat, LNK)); and
   - associate each symbol received Dat with one displayed color stored Co1' corresponding to a captured color stored Co2' in the first electronic device E1 (function illustrated in dotted lines in Fig. 2 CORR(E2, Co1', Dat)).

Finally, the mobile phone E2 is further adapted to display on the screen Sc all the symbol Dat with their associated displayed color stored Co1' (function illustrated in dotted lines in Fig. 2 DISPL(E2(CCe), Co1 (Dat))).

The communication system SYS is described hereinafter according to two non-limitative embodiments. Said two non-limitative embodiments permit to carry out two non-limitative embodiments of a calibration stage CA of a communication method MTH.

### • First non-limitative embodiment

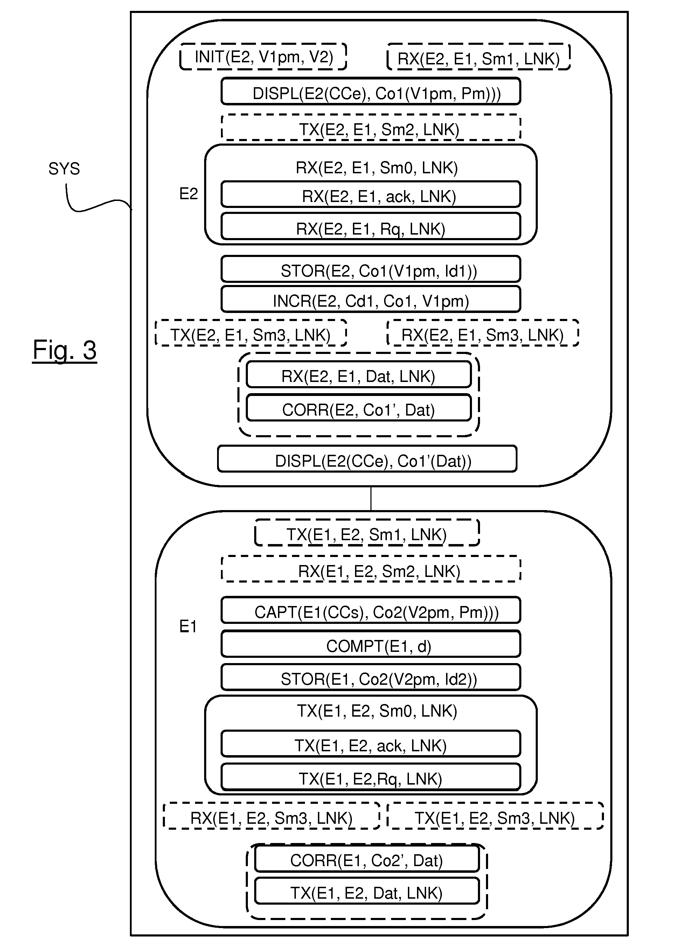

The first non-limitative embodiment is described with reference to the Fig. 3 to 6.

According to said non-limitative embodiment, as will be described hereinafter, the computation of the inter-color distance d is performed between a captured color Co2 and at least one captured color stored Co2', and if said inter-color distance d is greater than a predetermined value Vd for each captured color stored Co2', said portable electronic device E1 is further adapted to store said captured color Co2 (function illustrated in Fig. 3 STOR(E1, Co2(V2pm, Id2))).

When capturing a color Co2, the portable electronic device E1 stores said captured color Co2 in memory if, in particular, said captured color Co2 is different enough from the ones already stored in memory, that is to say the second value V2pm of the color parameter(s) is different enough from the other second values V2pm stored.

The storage of a color Co1 or Co2 means that the value V1 pm or V2pm of the color parameter Pm is stored in memory.

In order to discriminate, during the calibration, a captured color Co2 from another one stored in memory, the portable electronic device E1 uses the inter-color distance d between the captured color Co2 and one color Co2' stored in memory, and compares said inter-color distance with the predetermined value Vd which is high enough to ensure a reliable color modulation based communication later on.

Hence, when the portable electronic device E1 has found a captured color Co2 which may be used for the future color modulation based communication, it stores said captured color in memory with an index Id2, such as a rank storage in a memory table TB1 in a non-limitative example.

Then, it sends the acknowledgement signal ack to the mobile phone E2.

Upon reception of said acknowledgement signal ack, the mobile phone E2 stores the color Co1 it has displayed, with an index Id1, such as a rank storage in a memory table TB2 in a non-limitative example.

In non-limitative embodiment, the memory tables are stored in a rewritable nonvolatile memory.

As described before, if the first condition Cd1 is not fulfilled, the portable electronic device E1 asks the mobile phone E2 for another color Co1 to be displayed via a request signal Rq (sent via the BLE link LNK).

In non-limitative embodiments, the first condition Cd1 is fulfilled if:
- the number of captured colors stored Co2' is greater than a first predetermined value V0; or
- the first value V1pm of said at least one color parameter Pm is greater than a second predetermined value V1.

In a non-limitative embodiment, the first predetermined value V0 is equal to the number of virtual keys to be displayed on the screen Sc of the mobile phone E2. In a non-limitative example, the number of virtual keys is equal to twelve. The virtual keys comprise the ten digits and the virtual key "ok" and "cancel".

In a non-limitative embodiment, the second predetermined value V1 is equal to 360° when the color parameter Pm is hue H.

In a non-limitative embodiment, the second predetermined value V1 is equal to 100% when the color parameter Pm is saturation S.

The calibration CA is finished when the first condition Cd1 is fulfilled.

In a first non-limitative embodiment, the portable electronic device E1 is further adapted to send a calibration end signal Sm3 to said mobile phone E2 (function illustrated in dotted lines in Fig. 3 TX(E1, E2, Sm3, LNK).

The mobile phone E2 is further adapted to receive said calibration end signal Sm3 (function illustrated in dotted lines in Fig. 3 RX(E2, E1, Sm3, LNK)).

The calibration end signal Sm3 permits the portable electronic device E1 to inform the mobile phone E2 that the calibration ends (because the number of captured colors stored Co2' is greater than a first predetermined value V0).

The mobile phone E2 is further adapted to receive said calibration end signal Sm3 (function illustrated in dotted lines in Fig. 3 RX(E2, E1, Sm3, LNK)).

In a second non-limitative embodiment, the mobile phone E2 is further adapted to send a calibration end signal Sm3 to said portable electronic device E1 (function illustrated in dotted lines in Fig. 3 TX(E2, E1, Sm3, LNK).

The calibration end signal Sm3 permits the mobile phone E2 to inform the portable electronic device E1 that the calibration ends (because the first value V1 pm of said at least one color parameter Pm is greater than a second predetermined value V1).

The calibration end signal Sm3 permits the mobile phone E2 to inform the portable electronic device E1 that it stops the display of colors Co1 and therefore that the calibration ends.

The portable electronic device E1 is further adapted to receive said calibration end signal Sm3 (function illustrated in dotted lines in Fig. 3 RX(E1, E2, Sm3, LNK)).

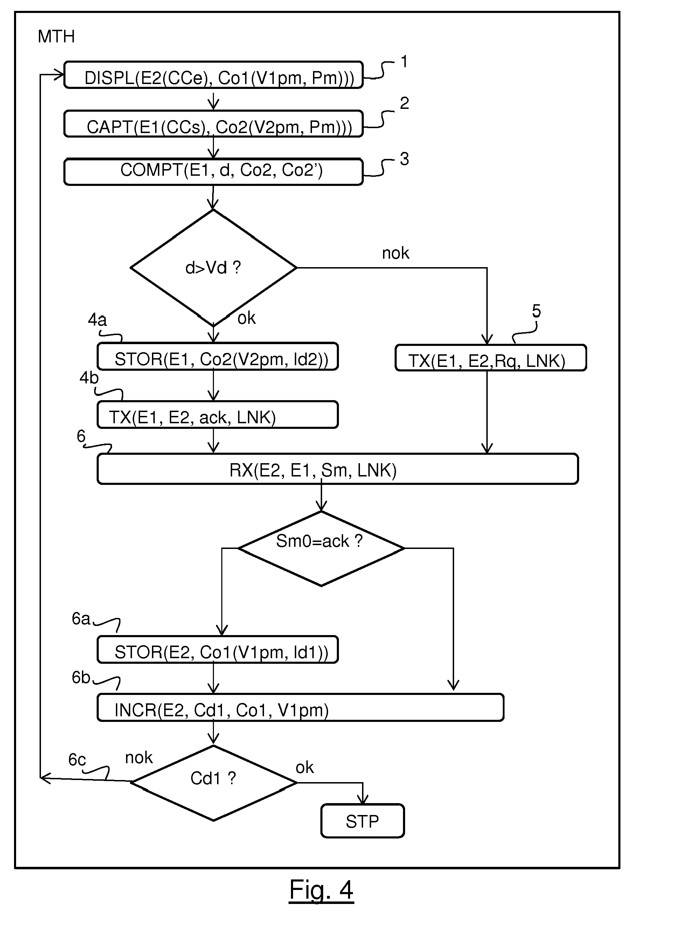

Hence, the communication system SYS described carries out a method MTH (illustrated in Fig. 4) between a first electronic device E1 and a second electronic device E2, said method MTH comprising:
- 1) displaying on a screen Sc by means of the color emitter CCe of said second electronic device E2 a color Co1 which varies according to a first value V1 pm of at least one color parameter Pm;
- 2) capturing by means of the color-sensor CCs of said first electronic device E1 a color Co2 which is the measure of first displayed color Co1 and whose at least one color parameter Pm comprises a second value V2pm;
- 3) computing by means of said first electronic device E1 at least one inter-color distance d between said captured color Co2 and at least another captured color stored Co2';
- 4) if said inter-color distance d is greater than a predetermined value Vd for each captured color stored Co2':
   - 4a) storing by means of said first electronic device E1 said captured color Co2; and
   - 4b) sending by means of said first electronic device E1 an acknowledgement signal ack to said second electronic device E2;
- 5) otherwise, sending by means of said first electronic device E1 a request signal Rq to said second electronic device E2 to display a new color Co1.
- 6) upon reception by means of said second electronic device E2 of a first signal Sm0:
   - 6a) if said first signal Sm0 is an acknowledgment signal ack, storing by means of said second electronic device E2 said displayed color Co1, said displayed color stored Co1' corresponding to a captured color stored Co2' in said first electronic device E1;
   - 6b) increasing by means of said second electronic device E2 the first value V1 pm of said at least one color parameter Pm;
   - 6c) if a first condition Cd1 is not fulfilled, displaying by means of said second electronic device E2 a new color Co1.

It is to be noted that if the first condition Cd1 is fulfilled, the calibration CA is finished (reference STP illustrated in Fig. 4).

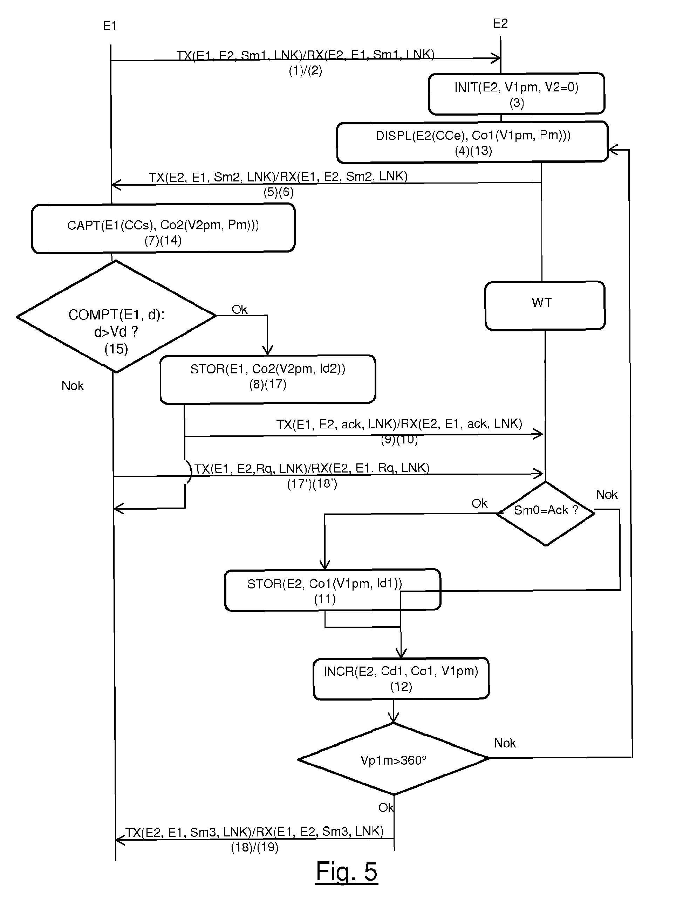

Fig. 5 illustrates a first diagram sequence of the method MTH which illustrates the calibration stage CA with the further following non-limitative embodiments:
- the use of one parameter Pm which is the hue H;
- the first condition Cd1 is fulfilled if the first value V1 pm of the hue H is greater than V1=360°;
- the sending by the portable electronic device E1 of the calibration signal Sm1;
- the sending by the mobile phone E2 of the notification signal Sm3.

**In step 1),** the portable electronic device E1 sends a calibration signal Sm1 to the mobile phone E2 to begin the calibration CA.
**In step 2),** the mobile phone E2 receives said calibration signal Sm1.
**In step 3),** the mobile phone E2 initializes the first value V1 pm of the hue H to zero (in a non-limitative example) and display a first color Co1 with said first value V1 pm zero
**in step 4).**
**In step 5),** the mobile phone E2 sends a notification signal Sm2 to inform the portable electronic device E1 that is has displayed a color Co1 and then wait for a signal from the portable electronic device E1 (step referred WT).
**In step 6),** said portable electronic device E1 receives said notification signal Sm2.
**In step 7),** the portable electronic device E1 captures a color Co2 which is the measure of first displayed color Co1. Said captured color Co2 has a second value V2pm of the hue H which is different from zero.
**In step 8),** the portable electronic device E1 stores said captured color Co2 as it is the first one captured and it hasn't got any colors stored Co2' yet.
   It associates the index Id2=0.
**In step 9),** the portable electronic device E1 sends an acknowledgement signal ack to said mobile phone E2 to inform that it has stored a color Co2 corresponding to the first displayed color Co1.
**In step 10),** the mobile phone E2 receives said acknowledgement signal ack and stores said first displayed color Co1 **in step 11).**
   The mobile phone E2 increases the first value V1pm of said at least one color parameter Pm **in step 12).** As the first value V1 pm of the hue H is lesser than 360°, the mobile phone E2 displays a new color Co1 based on this new first value V1 pm **in**
**step 13).**
**In step 14),** the portable electronic device E1 captures the corresponding color Co2. Said captured color Co2 has another second value V2pm of the hue H which is different from said new first value V1 pm of the hue H.
**In step 15),** the portable electronic device E1 computes the inter-color distance d between said captured color Co2 and the captured color which has been stored Co2' in memory.
**In step 16)** if said inter-color distance d is greater than a predetermined value Vd, the portable electronic device E1 stores said captured color Co2 in memory **in step 17),** and sends an acknowledgement signal ack to said mobile phone E2 to inform that it has stored a color Co2 corresponding to the first displayed color Co1...etc.
   It is to be noted that as in the non-limitative example, twelve colors Co2' are to be used for the twelve digits, the maximum value of Vd is equal to 360°/12=30°.
**In step 16')** if said inter-color distance d is lesser than a predetermined value Vd, the portable electronic device E1 sends a request signal Rq to said mobile phone E2 to display a new color Co1 **(in step 17'). In step 18')**, said mobile phone E2 receives said request signal Rq.
And so on until the first value V1 pm of the hue H is greater than 360°.
When there is a plurality of captured colors Co2' which are stored in memory, the portable electronic device E1 ensures that the inter-color distance d is superior to Vd for all captured colors stored. For this purpose, it is to be noted that it doesn't necessary need to compute as many inter-color distance d as the number of captured colors stored Co2'. **In step 18),** when the first condition Cd1 is fulfilled (V1 pm> 360° in the non-limitative example), the mobile phone E2 sends the calibration end signal Sm3 to the portable electronic device E1 which receives it **in step 19).**

When the calibration CA is successful (all the required colors Co2' and corresponding colors Co1' have been found and stored), the color modulation based communication stage may begin.

It may begin with the association of the symbol Dat to a chosen number of captured colors stored Co2' in the portable electronic device E1, and therefore to the corresponding displayed colors stored Co1' in the mobile phone E2.

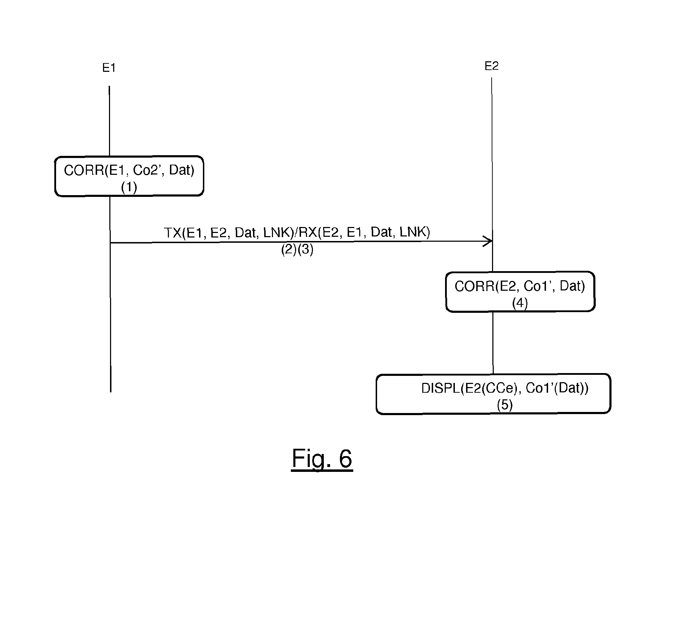

Fig. 6 illustrates a second diagram of the method MTH comprising the association stage with these further non-limitative embodiments:
- the association of the symbol Dat with the stored colors Co2' and Co1' at the end of the calibration CA;
- the association of twelve symbol Dat which are in a non-limitative examples: digits 0 to 9 and symbol "Ok" and "Cancel";
- the display of the symbol Dat with their associated color stored Co1' on the screen Sc.

**In step 1),** the portable electronic device E1 associates each one of the twelve symbol Dat with one of the twelve captured colors stored Co2' it has chosen.
**In step 2),** the portable electronic device E1 transmits the twelve symbol Dat to said mobile phone E2 and the associated index Id2 of the corresponding colors Co2' chosen.
   Hence, in a non-limitative example, the digits 0, 1, 2, 3, 4, 5, 6, 7, 8, 9, and the symbol "Ok" and "Cancel" are respectively associated with the stored color Co2' at index Id2=0, 1, 2, 3, 4, 5, 6, 7, 8, 9, 10, 11, and 12. The index is increased by one each time there is a new color to be stored.
**In step 3),** the mobile phone E2 receives said twelve symbol Dat and the associated index Id2 and **in step 4),** it associates each symbol Dat with each displayed color stored Co1 at same value of index Id1 corresponding to index Id2.
   Hence, in the given non-limitative example, the colors Co1 stored at index Id1=0, 2, 3, 4, 5, 6, 7, 8, 9, 10,11, and 12, will be associated respectively with the digits 0, 1, 2, 3, 4, 5, 6, 7, 8, 9, and the symbol "Ok" and "Cancel". The index is increased by one each time there is a new color to be stored.
**In step 5),** after finishing the correlation between the symbol Dat and the colors stored Co1, the mobile phone E2 display on the screen Sc all the symbol Dat with their associated displayed color stored Co1'.

It is to be noted that in another non-limitative embodiment, the step 6 (storage in memory the captured color Co2) may be performed after the step 7 (transmission of the acknowledge information ack).

When the association of symbol Dat and colors is finished, the color modulation based communication stage may begin.

The PIN code entry is taken as a non-limitative example for data exchange during a color modulation based communication.

To enter the PIN code, the user will place (in a contact way or in a contactless way) the portable electronic device E1 on each virtual key displayed on the screen Sc of the mobile phone E2 which corresponding symbol Dat composes the PIN code, and then will place the portable electronic device E1 on the virtual key displaying "Ok" for validation.

In a non-limitative example, the PIN code comprises the following four digits 1-5-4-9.

In the non-limitative given example, the user will consecutively place his portable electronic device E1 on virtual key corresponding to the colors with the index 1 (for digit "1 "), 5 (for digit "5"), 4 (for digit "4"), 9 (for digit "9") and then 11 (for the data Dat="Ok"). In order to measure a displayed color, in a non-limitative embodiment, the user will press a button which activates the color-sensor CCS. Said color-sensor CCs measures the displayed color Co1. In another non-limitative embodiment, the portable electronic device E1 comprises a sensor which spots if the portable electronic device E1 is placed on a specific color on the screen Sc. The measure of a displayed color is therefore automatically triggered.

For each digit, the portable electronic device E1 will measure the color displayed on the screen Sc of the mobile phone E2 and more particularly will measure the second value V2pm of the hue H. The portable electronic device E1 will compare this hue value V2pm with all the hue values stored in its memory. When it finds the nearest hue value stored, it will read the associated symbol Dat stored. It the PIN code entered by the user via the color modulation based communication is the same as the one registered in the portable electronic device E1, said portable electronic device E1 will be unlocked and will give the user access to its secured data. Otherwise, the user won't have access to the secured data stored in the portable electronic device E1.

In non-limitative examples, the secured data are the bank card numbers, or a pair of keys for authentication to a banking payment server etc.

Hence, thanks to the color modulation based communication, the PIN code is transmitted to the first electronic device E1 via the mobile phone E2, but in a secure way, as the mobile phone E2 is not able to recover the digits (here, "1-5-4-9") which composed said PIN code.

It is to be noted that this description of this association stage may also be applied for the second non-limitative embodiment of the communication system SYS which is described hereinafter.

### • Second non-limitative embodiment

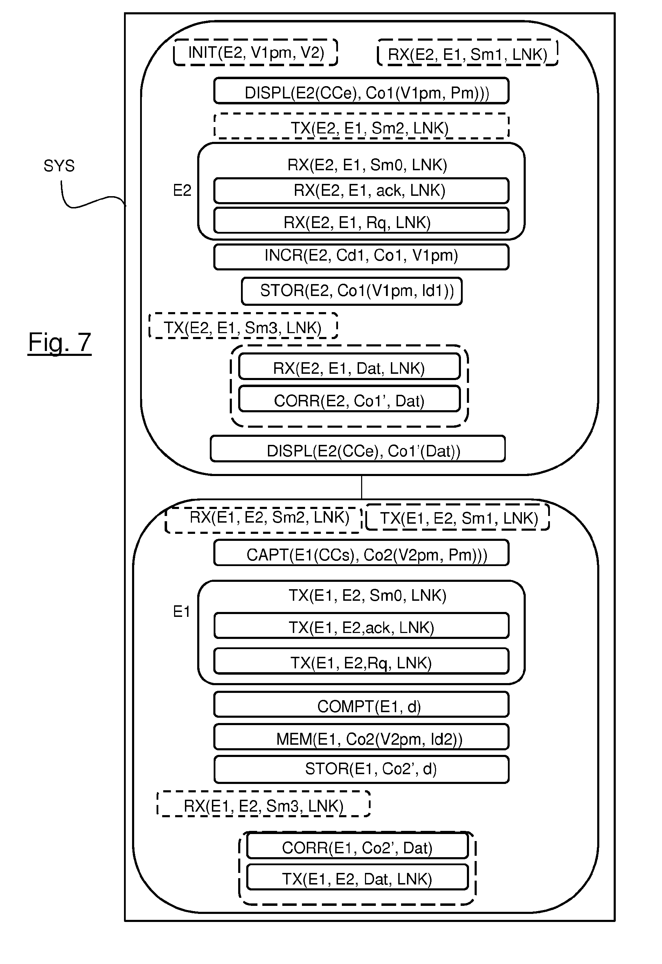

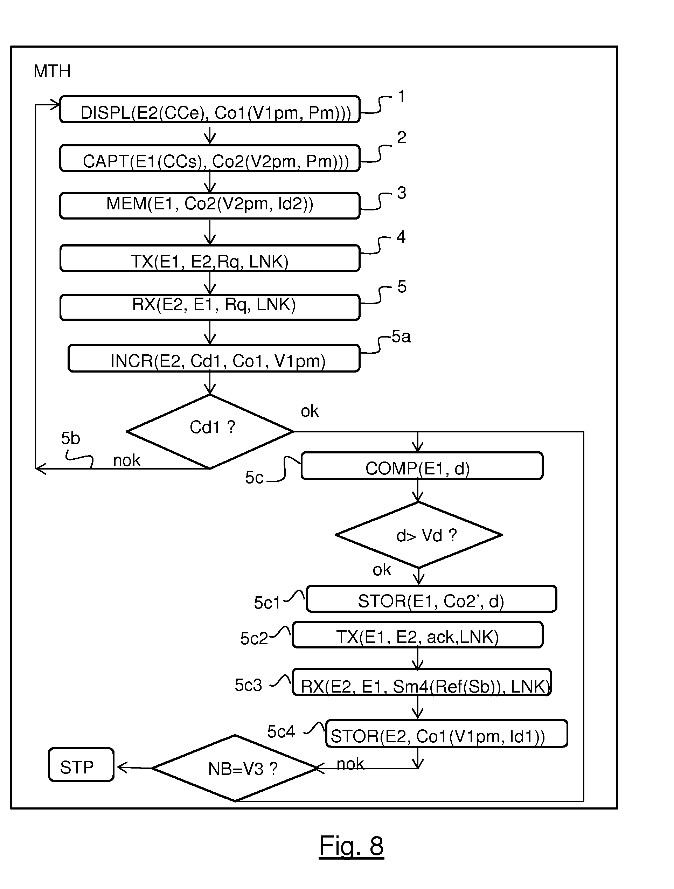

Said second non-limitative embodiment is illustrated with reference to the Fig. 7 and 8.

According to this second-non-limitative embodiment, instead of performing the test of the inter-color distance d each time a color Co2 is captured, all the captured colors Co2 are temporarily memorized . Then, the portable electronic device E1 computes the inter-color distance d between a temporarily memorized color and at least one captured color stored in order to find the captured colors stored Co2' to be used for the future color modulation based communication, and send for each selection an acknowledgement signal ack to the mobile phone E2.

Hence, according to this second non-limitative embodiment, said first electronic device E1 is further adapted to temporarily memorize each color which is captured Co2(function illustrated in Fig. 7 MEM(E1, Co2(V2pm, Id2))), and the computation of the inter-color distance d is performed between a temporarily memorized captured color Co2 and a captured color stored Co2'.

In a non-limitative embodiment, said portable electronic device E1 temporarily memorizes a captured color Co2 in memory with an order number No in a temporary memory table (not illustrated) in a non-limitative example.

In a non-limitative embodiment, said mobile phone E2 temporarily memorizes a displayed color Co1 in memory with the same order number No as the corresponding captured color Co2.

In non-limitative embodiment, the temporary memory tables are stored in a volatile memory, such as in a non-limitative example a RAM ("Random Access Memory").

Furthermore, in a non-limitative embodiment:
- if a first condition Cd1 is fulfilled, said first electronic device E1 is further adapted to:
   - compute said inter-color distance d for at least one captured color stored Co2' (function illustrated in Fig. 7 COMP(E1, d));
   - if said inter-color distance d is greater than said predetermined value Vd for each captured color stored Co2',
      - store said temporarily memorized captured color (function illustrated in Fig. 7 STOR(E1, Co2', d))); and
      - send to said second electronic device E2 an acknowledgment signal ack (function illustrated in Fig. 7 TX(E1, E2, ack, LNK)).

When there is a plurality of captured colors Co2' which are stored in memory, the portable electronic device E1 ensures that the inter-color distance d is superior to Vd for all captured colors stored. For this purpose, it is to be noted that it doesn't necessary need to compute as many inter-color distance d as the number of captured colors stored Co2'.

As described before, upon reception of said acknowledgement signal, the mobile phone E2 is adapted to store a color displayed Co1', said displayed color stored Co1' corresponding to said captured color stored Co2' in said first electronic device E1.

The two steps after the first condition Cd1 is fulfilled are performed a number of times equal to at least a predetermined value V3.

Therefore, the portable electronic device E1 will send, in this case, twelve associated acknowledgement signals ack.

In a non-limitative embodiment, an acknowledgment signal ack comprises the order number of the temporarily captured color Co2 corresponding to the captured color stored Co2'. It will permit the mobile phone E2 to recover the corresponding displayed color Co1 with said order number No. Said displayed color Co1 is then stored by said mobile phone E2.

In this second non-limitative embodiment, the first condition Cd1 is fulfilled if the first value V1pm of said at least one color parameter Pm is greater than a second predetermined value V1.

As described before, in a non-limitative embodiment, the second predetermined value V1 is equal to 360° when the color parameter Pm is hue H.

In a non-limitative embodiment, the second predetermined value V1 is equal to 100% when the color parameter Pm is saturation S.

Hence, in order to inform said portable electronic device E1 that the first condition Cd1 is fulfilled, in a non-limitative embodiment, the mobile phone E2 is further adapted to send a calibration end signal Sm3 to said portable electronic device E1 (function illustrated in dotted lines in Fig. 7 TX(E2, E1, Sm3, LNK).

The calibration end signal Sm3 permits the mobile phone E2 to inform the portable electronic device E1 that the calibration ends (because the first value V1 pm of said at least one color parameter Pm is greater than a second predetermined value V1).

The calibration end signal Sm3 permits the mobile phone E2 to inform the portable electronic device E1 that it stops the display of colors Co1 and therefore that the calibration ends.

The portable electronic device E1 is further adapted to receive said calibration end signal Sm3 (function illustrated in dotted lines in Fig. 7 RX(E1, E2, Sm3, LNK)).

Hence, the communication system SYS according to said second non-limitative embodiment is adapted to carry out a communication method MTH (illustrated in Fig. 8) between a first electronic device E1 and a second electronic device E2, wherein said communication method MTH comprises:
- 1) displaying on a screen Sc by means of the color emitter CCe of said second electronic device E2 a color Co1 which varies according to a first value V1 pm of at least one color parameter Pm;
- 2) capturing by means of the color-sensor CCs of said first electronic device E1 a color Co2 which is the measure of said displayed color Co1, and whose at least one color parameter Pm comprises a second value V2pm;
- 3) temporarily memorizing by means of said first electronic device E1 said captured color Co2;
- 4) sending by means of said first electronic device E1 a request signal Rq to said second electronic device E2 to display a new color Co1;
- 5) upon reception by means of said second electronic device E2 of a request signal Rq from said first electronic device E1 for a new color Co1 to be displayed:
   - 5a) increasing by means of said second electronic device E2 the first value (V1 pm) of said at least one color parameter Pm; and
   - 5b) if a first condition Cd1 is not fulfilled, displaying by means of said second electronic device E2 a new color Co1;
   - otherwise (that is to say if a first condition Cd1 is fulfilled):
      - 5c) computing by means of said first electronic device E1 an inter-color distance d between said temporarily memorized captured color Co2 and at least one captured color stored Co2'; and
      - if said inter-color distance d is greater than a predetermined value Vd for each captured color stored Co2',
         - 5c1) storing by means of said first electronic device E1 said temporarily captured color Co2;
         - 5c2) sending by means of said first electronic device E1 to said second electronic device E2 an acknowledgment signal ack;
         - 5c3) upon reception by means of said second electronic device E2 from said first electronic device E1 of said acknowledgment signal ack, 5c4) storing by means of said second electronic device E2 a color displayed Co1, said displayed color stored Co1' corresponding to said captured color stored Co2' in said first electronic device E1.

The steps after first condition Cd1 is fulfilled are repeated until the number NB of captured colors stored Co2' are at least equal to the predetermined value V3. In a non-limitative embodiment, V3 corresponds to the number of symbols Dat to be used for the future color modulation based communication.

In the non-limitative example, V3=12.

Hence, the captured colors stored Co2' and their corresponding displayed colors stored Co1' will be used for the future color modulation based communication.

When the calibration CA is successful (all the required colors Co2' and corresponding colors Co1' have been selected), the color modulation based communication stage may begin.

It may begin with the association of the symbol Dat to a chosen number of captured colors stored Co2' in the portable electronic device E1, and therefore to the corresponding displayed colors stored Co1' in the mobile phone E2.

The association of symbol Dat with the captured colors stored Co2', described (in particular in Fig. 6) for the first non-limitative embodiment, applied also for this second non-limitative embodiment of the communication system and the communication method MTH. Here, the captured colors stored Co2' to which the symbol Dat are associated (and therefore their corresponding displayed colors stored Co1') are the one which have been selected within the subset Sb.

It is to be understood that the present invention is not limited to the aforementioned embodiments and variations and modifications may be made without departing from the scope of the invention.

Hence, according to the second non-limitative embodiment, instead of sending an acknowledgement signal ack (comprising one order number No) each time the portable electronic device E1 find a temporarily memorized captured color Co2 whose inter-color distance d with all the captured colors stored Co2' is greater than the predetermined value Vd, the portable electronic device E1 may send a unique signal which comprises all the order numbers No of temporarily memorized captured colors that correspond to all the captured colors stored.

In another non-limitative embodiment, if the number NB of captured colors stored Co2 is greater to the predetermined value V3, the portable electronic device E1 will chose the captured colors stored, which will be used for the future color modulation based communication, during the association stage described before.

Hence, some embodiments of the invention may comprise one or a plurality of the following advantages:
- if the color modulation based communication is meant to be used with a wide variety of second electronic devices (like Android-based devices), the solution offers a really fast, easy and convenient way for the user to calibrate a pair of first electronic device and second electronic device to use the color-based user interface. Indeed, the user has just to put the first electronic device on the screen of the second electronic device and wait for the calibration to be done which takes little time;
- it permits a user to transmits data to first electronic device E1 via the screen of the second electronic device E2 in a secured way, without the second electronic data E2 to be able to recover said transmitted data.

## Claims

1. Communication system (SYS) between a first electronic device (E1) and a second electronic device (E2), **wherein** said communication system (SYS) comprises:
- said second electronic device (E2) which comprises a color emitter (CCe) and a screen (Sc) and which is adapted to:
- display on said screen (Sc) by means of the color emitter (CCe) a color (Co1) which varies according to a first value (V1pm) of at least one color parameter (Pm);
- upon reception of a first signal (Sm0) from said first electronic device (E1):
- if said first signal (Sm0) is an acknowledgement signal (ack), store said displayed color (Co1), said displayed color stored (Co1') corresponding to a captured color stored (Co2') in said first electronic device (E1).
- increase the first value (V1 pm) of said at least one color parameter (Pm);
- displayed a new color (Co1) according to said increased first value (V1 pm);
- said first electronic device (E1) which comprises a color-sensor (CCs) and which is adapted to:
- capture by means of the color-sensor (CCs) a color (Co2) which is the measure of said displayed color (Co1), and whose at least one color parameter (Pm) comprises a second value (V2pm);
- compute an inter-color distance (d) between two captured colors (Co2, Co2');
- if said inter-color distance (d) is greater than a predetermined value (Vd) for each captured color stored (Co2'), send an acknowledgement signal (ack) to said second electronic device (E2);
- send a request signal (Rq) to said second electronic device (E2) to display a new color (Co1).

2. First electronic device (E1) adapted to communicate with a second electronic device (E2), **wherein** said first electronic device (E1) comprises a color-sensor (CCs) and is adapted to:
- capture by means of the color-sensor (CCs) a color (Co2) which is the measure of a color displayed (Co1) by means of a color emitter (CCe) of said second electronic device (E2), and whose at least one color parameter (Pm) comprises a second value (V2pm);
- compute an inter-color distance (d) between two captured colors (Co2, Co2');
- if said inter-color distance (d) is greater than a predetermined value (Vd) for each captured color stored (Co2'), send an acknowledgement signal (ack) to said second electronic device (E2);
- send a request signal (Rq) to said second electronic device (E2) to display a new color (Co1).

3. Second electronic device (E2) adapted to communicate with a first electronic device (E1), **wherein** said second electronic device (E2) comprises a color emitter (CCe) and a screen (Sc) and is adapted to:
- display on said screen (Sc) by means of the color emitter (CCe) a color (Co1) which varies according to a first value (V1 pm) of at least one color parameter (Pm);
- upon reception of a first signal (Sm0) from said first electronic device (E1):
- if said first signal (Sm0) is an acknowledgement signal (ack), store said displayed color (Co1), said displayed color stored (Co1') corresponding to a captured color stored (Co2') in said first electronic device (E1);
- increase the first value (V1 pm) of said at least one color parameter (Pm);
- displayed a new color (Co1) according to said increased first value (V1 pm).

4. Communication system (SYS), or first electronic device (E1), or second electronic device (E2), according to claims 1 to 3, **wherein** the computation of the inter-color distance (d) is performed between a captured color (Co2) and at least one captured color stored (Co2'), and if said inter-color distance (d) is greater than a predetermined value (Vd) for each captured color stored (Co2'), said first electronic device (E1) is further adapted to store said captured color (Co2).

5. Communication system (SYS), or first electronic device (E1), or second electronic device (E2), according to claims 1 to 3, **wherein** said first electronic device (E1) is further adapted to temporarily memorize each color which is captured (Co2), and the computation of the inter-color distance (d) is performed between a temporarily memorized captured color (Co2) and a captured color stored (Co2').

6. Communication system (SYS),or first electronic device(E1),or second electronic device (E2), according to claim 5, **wherein:**
- if a first condition (Cd1) is fulfilled, said first electronic device (E1) is further adapted to:
- compute said inter-color distance (d) for at least one captured color stored (Co2');
- if said inter-color distance (d) is greater than said predetermined value (Vd) for each captured color stored (Co2'),
- store said temporarily memorized captured color;
- send to said second electronic device (E2) an acknowledgment signal (ack).

7. Communication system (SYS), or first electronic device (E1), or second electronic device (E2), according to one of the previous claims 1 to 6, **wherein:**
- said second electronic device (E2) is further adapted to send a signal (Sm2) to said first electronic device (E1) to inform of the display of a color (Co1); and
- said first electronic device (E1) is further adapted to receive said signal (Sm2).

8. Communication system (SYS), or first electronic device (E1), or second electronic device (E2), according to one of the previous claims 1 to 7, **wherein** said at least one color parameter (Pm) is hue (H) and/or saturation (S).

9. Communication system (SYS), or first electronic device (E1), or second electronic device (E2), according to one of the previous claims 1 to 8, **wherein** when the first condition (Cd1) is fulfilled, said first electronic device (E1) is further adapted to:
- associate a symbol (Dat) with at least one captured color stored (Co2'); and
- transmit the symbol (Dat) to said second electronic device (E2); and
- said second electronic device (E2) is further adapted to:
- receive the symbol (Dat) from said first electronic device (E2); and
- associate each symbol received (Dat) with at least one displayed color stored (Co1') corresponding to a captured color stored (Co2') in the first electronic device (E1).

10. Communication system (SYS), or first electronic device (E1), or second electronic device (E2), according to the previous claim 9, **wherein** said second electronic device (E2) is further adapted to display on the screen (Sc) all the symbols (Dat) with their associated displayed color stored (Co1').

11. Communication system (SYS), or first electronic device (E1), or second electronic device (E2), according to one of the previous claims 1 to 10, **wherein** said first electronic device (E1) and said second electronic device (E2) are adapted to communicate via a Bluetooth Low Energy™ link (LNK).

12. Communication system (SYS), or first electronic device (E1), or second electronic device (E2), according to one of the previous claims 1 to 11, **wherein** said second electronic device (E2) is a mobile phone, a tablet, a phablet, a personal computer, or a laptop, or a portable device equipped with a light emitted diode (LED).

13. Communication system (SYS), or first electronic device (E1), or second electronic device (E2), according to one of the previous claims 1 to 12, **wherein** said first electronic device (E1) is a portable electronic device.

14. Communication method (MTH) between a first electronic device (E1) and a second electronic device (E2), **wherein** said communication method (MTH) comprises:
- displaying on a screen (Sc) by means of the color emitter (CCe) of said second electronic device (E2) a color (Co1) which varies according to a first value (V1 pm) of at least one color parameter (Pm);
- capturing by means of the color-sensor (CCs) of said first electronic device (E1) a color (Co2) which is the measure of said displayed color (Co1), and whose at least one color parameter (Pm) comprises a second value (V2pm);
- computing by means of said first electronic device (E1) an inter-color distance (d) between said captured color (Co2) and at least another captured color which is stored (Co2');
- if said inter-color distance (d) is greater than a predetermined value (Vd) for each captured color stored (Co2'), storing by means of said first electronic device (E1) said captured color (Co2) and send by means of said first electronic device (E1) an acknowledgement signal (ack) to said second electronic device (E2);
- otherwise, sending by means of said first electronic device (E1) a request signal (Rq) to said second electronic device (E2) to display a new color (Co1).
- upon reception by means of said second electronic device (E2) of a first signal (Sm0):
- if said first signal (Sm0) is an acknowledgment signal (ack), storing by means of said second electronic device (E2) said displayed color (Co1), said displayed color stored (Co1') corresponding to a captured color stored (Co2') in said first electronic device (E1);
- increasing by means of said second electronic device (E2) the first value (V1 pm) of said at least one color parameter (Pm);
- if a first condition (Cd1) is not fulfilled, displaying by means of said second electronic device (E2) a new color (Co1).

15. Communication method (MTH) between a first electronic device (E1) and a second electronic device (E2), **wherein** said communication method (MTH) comprises:
- displaying on a screen (Sc) by means of the color emitter (CCe) of said second electronic device (E2) a color (Co1) which varies according to a first value (V1 pm) of at least one color parameter (Pm);
- capturing by means of the color-sensor (CCs) of said first electronic device (E1) a color (Co2) which is the measure of said displayed color (Co1), and whose at least one color parameter (Pm) comprises a second value (V2pm);
- storing by means of said first electronic device (E1) said captured color (Co2);
- sending by means of said first electronic device (E1) a request signal (Rq) to said second electronic device (E2) to display a new color (Co1);
- upon reception by means of said second electronic device (E2) of a request signal (Rq) from said first electronic device (E1) for a new color (Co1) to be displayed:
- increasing by means of said second electronic device (E2) the first value (V1 pm) of said at least one color parameter (Pm); and
- if a first condition (Cd1) is not fulfilled, displaying by means of said second electronic device (E2) a new color (Co1);
- otherwise:
- computing by means of said first electronic device (E1) an inter-color distance (d) between said temporarily memorized captured color (Co2) and at least one captured color stored (Co2'); and
- if said inter-color distance d is greater than a predetermined value (Vd) for each captured color stored (Co2'),
- storing by means of said first electronic device (E1) said temporarily captured color (Co2);
- sending by means of said first electronic device (E1) to said second electronic device (E2) an acknowledgment signal (ack);
- upon reception by means of said second electronic device (E2) from said first electronic device (E1) of said acknowledgment signal (ack), storing by means of said second electronic device (E2) a color displayed (Co1'), said displayed color stored (Co1') corresponding to said captured color stored (Co2') in said first electronic device (E1).
